(19) Europäisches Patentamt
European Patent Office
Office européen des brevets

(11) **EP 1 943 901 A2**

(12) **EUROPEAN PATENT APPLICATION**

(43) Date of publication:
**16.07.2008 Bulletin 2008/29**

(21) Application number: **08000354.4**

(22) Date of filing: **10.01.2008**

(51) Int Cl.:
*A01N 43/40* [(2006.01)]   *A01N 43/50* [(2006.01)]
*A01N 43/653* [(2006.01)]   *A01N 43/78* [(2006.01)]
*A01N 47/12* [(2006.01)]   *A01N 25/00* [(2006.01)]

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.01.2007 JP 2007004087**

(71) Applicant: **Nissan Chemical Industries, Ltd.**
**Chiyoda-ku,**
**Tokyo 101-0054 (JP)**

(72) Inventors:
• **Honda, Takashi**
  **Tokyo 101-0054 (JP)**
• **Hasunuma, Nakako**
  **Minamisaitama-gun**
  **Saitama 349-0218 (JP)**

(74) Representative: **HOFFMANN EITLE**
**Patent- und Rechtsanwälte**
**Arabellastrasse 4**
**81925 München (DE)**

(54) **Method of controlling plant disease**

(57) A new method of controlling plant diseases is provided. A method of controlling plant disease characterized by comprising attaching at least one fungicidal active compound selected from 3-(3-bromo-6-fluoro-2-methylindol-1-ylsulfonyl)-N,N-dimethyl-1H-1,2,4-triazole-1-sulfonamide, cyazofamid, fluazinam, ethaboxam and benthiavalicarb to a seed of a plant, or applying the at least one fungicidal active compound to cultivation soil between pre-sowing and post-covering with soil.

EP 1 943 901 A2

## Description

Technical Field

The present invention relates to a method of controlling plant disease.

Background Art

It is known a method of controlling plant disease characterized by treating seeds with at least one effective microorganism having an antagonistic action against a pathogen of a plant disease, and at least one inducer inducing a systemic resistance of a plant (see, Patent Document 1, for example). In addition, it is also known a method of controlling clubroot characterized by subjecting a soil to mixing, irrigation, planting hole treatment, root treatment, row treatment or sowed ditch treatment with a specific chemical formulation (see, Patent Document 2, for example).

However, it is not known to use a fungicidal active compound selected from 3-(3-bromo-6-fluoro-2-methylindol-1-ylsulfonyl)-N,N-dimethyl-1H-1,2,4-triazole-1-sulfonamide (generic name: amisulbrom, hereinafter referred to also as Compound A), cyazofamid, fluazinam, ethaboxam and benthiavalicarb for the above-mentioned methods.

Patent Document 1: JP-A 2003-034607

Patent Document 2: JP-A 2005-350387

Disclosure of the Invention

Problem to be solved by the Invention

It is an object of the present invention to provide a method of controlling plant disease that exerts an excellent controlling effect compared with the conventional methods of controlling plant disease.

Means for Solving the Problem

The present inventors have found, after intensive study, that more excellent controlling effects compared with the conventional controlling methods can be exerted by attaching a fungicidal active compound selected from 3-(3-bromo-6-fluoro-2-methylindol-1-ylsulfonyl)-N,N-dimethyl- 1H-1,2,4-triazole-1-sulfonamide; cyazofamid, fluazinam, ethaboxam and benthiavalicarb to a seed of a plant, or applying (spraying or irrigating) the fungicidal active compound to cultivation soil between pre-sowing and post-covering with soil. That is, the present invention relates to a method of controlling plant disease described in any one of the following (1) to (6) (hereinafter referred to as method of the present invention), and a plant seed described in the following (7) or (8) (hereinafter referred to as seed of the present invention).

(1) A method of controlling plant disease characterized by comprising attaching at least one fungicidal active compound selected from 3-(3-bromo-6-fluoro-2-methylindol-1-ylsulfonyl)-N,N-dimethyl-1H-1,2,4-triazole-1-sulfonamide, cyazofamid, fluazinam, ethaboxam and benthiavalicarb to a seed of a plant, or applying the at least one fungicidal active compound to cultivation soil between pre-sowing and post-covering with soil.

(2) A method of controlling plant disease characterized by comprising attaching at least one fungicidal active compound selected from 3-(3-bromo-6-fluoro-2-methylindol-1-ylsulfonyl)-N,N-dimethyl-1H-1,2,4-triazole-1-sulfbnamide, cyazofamid, fluazinam, ethaboxam and benthiavalicarb to a seed of a plant.

(3) A method of controlling plant disease characterized by comprising applying at least one fungicidal active compound selected from 3-(3-bromo-6-fluoro-2-methylindol-1-ylsulfonyl)-N,N-dimethyl-1H-1,2,4-triazole-1-sulfonamide, cyazofamid, fluazinam, ethaboxam and benthiavalicarb to cultivation soil between pre-sowing and post-covering with soil.

(4) The method of controlling plant disease described in any one of (1) to (3), wherein the plant disease is a disease that Mastigomycotina or clubroot fungus causes.

(5) The method of controlling plant disease described in any one of (1) to (3), wherein the plant disease is phytophthora blight or clubroot.

(6) The method of controlling plant disease described in any one of (1) to (5), wherein the fungicidal active compound is a compound selected from 3-(3-bromo-6-fluoro-2-methylindol-1-ylsulfonyl)-N,N-dimethyl-1H-1,2,4-triazole-1-sulfonamide and cyazofamid.

(7) A plant seed to which at least one fungicidal active compound selected from 3-(3-bromo-6-fluoro-2-methylindol-1-ylsulfonyl)-N,N-dimethyl-1 H-1,2,4-triazole-1-sulfonamide, cyazofamid, fluazinam, ethaboxam and benthiavalicarb is attached.

(8) The plant seed described in (7), wherein the fungicidal active compound is a compound selected from 3-(3-bromo-6-fluoro-2-methylindol-1-ylsulfonyl)-N,N-dimethyl-1H-1,2,4-triazole-1-sulfbnamide and cyazofamid.

Effect the Invention

According to the present invention, an excellent effect of controlling plant disease compared with the conventional methods of controlling plant disease is exerted.

Best Mode for carrying out the Invention

The fungicidal active compound selected from Compound A, cyazofamid, fluazinam, ethaboxam and benthiavalicarb is a compound having controlling activity against diseases that Mastigomycotina or clubroot fungus causes.

In the present invention, other active compounds of agricultural chemicals can be used in addition to the above-mentioned fungicidal active compound. The active compounds of agricultural chemicals include herbicides, insecticides, acaricides, nematocides, bactericides, antivirals, plant growth regulators, fungicides, synergists, attractants, repellents, and biopesticides, etc. Specific generic names (or chemical names) of the active compounds of agricultural chemicals for example are as follows, but not limited to these.

Fungicides: acibenzolar-S-methyl, acylaminobenzamide, acypetacs, aldimorph, amobam, ampropyfos, anilazine, allyl alcohol, aureofungin, azaconazole, azithiram, azoxystrobin, barium polysulfide, benalaxyl, benodanil, benomyl, benquinox, bentaluron, benthiazole, benzalkonium chloride, benzamacril, benzamorf, benzohydroxamic acid, binapacryl, biphenyl, bitertanol, bithionol, bethoxazine, bordeaux mixture, boscalid, blasticidin-S, bromoconazole, bupirimate, buthiobate, butylamine, calcium polysulfide, captafol, captan, copper oxychloride, carpropamid, carbamorph, carbendazim, carboxin, carvone, Cheshunt mixture, chinomethionat, chlobenthiazone, Chloraniformethane, Chloranil, chlorfenazol, 5-chlor-7-(4-methyl-piperidin-1-yl)-6-(2,4,6-trifluor-phenyl)-[1,2,4]triazolo[1,5-a]pyrimidin, chloroneb, Chloropicrin, chlorothalonil, Chlorquinox, chlozolinate, Climbazole, Clotrimazole, copper acetate, basic copper carbonate, copper hydroxide, copper naphthenate, copper oleate, basic copper oxychloride, copper sulfate, basic copper sulfate, copper zinc chromate, cresol, cufraneb, cuprobam, cyclafuramid, cycloheximide, cyflufenamid, cymoxanil, cypendazole, cyproconazol, cyprodinil, cyprofuram, dazomet, DBCP, debacarb, Decafentin, dehydroacetic acid, dichlone, dichlorophen, dichlozoline, diclobutrazol, dichlofluanid, diclomedine, dicloran, diethofencarb, diethyl pyrocarbonate, diclocymet, difenoconazole, diflumetorim, dimethirimol, dimethomorph, dimoxystrobin, diniconazole, diniconazole-M, dinobuton, dinocap, dinocap-4, dinocap-6, dinocton, dinosulfon, dinoterbon, diphenylamine, dipyrithione, disulfiram, ditalimfos, dithianon, DNOC, dodemorph, dodine, drazoxolon, edifenphos, epoxiconazole, etaconazole, ethirimol, etridiazole, Etem, Ethoxyquin, ethylmercury acetate, ethylmercury bromide, ethylmercury chloride, ethylmercury phosphate, famoxadone, fenarimol, febuconazole, fenamidone, fendazosulam, fenfuram, fenhexamid, fenoxanil, fenpiclonil, fenpropidin, fenpropimorph, fentin, ferbam, ferimzone, fludioxonil, fluopicolide, fluoroimide, fluquinconazole, flusilazole, flusulfamide, flutolanil, flutriafol, folpet, fesetyl-aluminium, fuberidazole; furalaxyl, furametpyr, fenaminosulf, fenapanil, fenitropan, fenoxanil, flumetover, flumorph, fluotrimazole, fluoxastrobin, furcarbanil, furconazole, furconazole-cis, furmecyclox, furophanate, guazatine, glyodin, griseofulvin, hexachlorobenzene, hexaconazole, hymexazol, halacrinate, hexachlorobutadiene, hexylthiofos, 8hydroxyquinoline sulfate, imazalil, imibenconazole, iminoctadine, ipconazole, iprobenfos, iprodione, isoprothiolane, iprovalicarb, isovaledione, kasugamycin, kresoxim-methyl, mancopper, mancozeb, mandipropamid, maneb, mepanipyrim, mepronil, metalaxyl, metconazole, methasulfocarb, metiram, metominostrobin, myclobutanil, MTF-753 (a name of a study), mebenil, mecarbinzid, mercuric chloride, mercuric oxide, mercurous chloride, metalaxyl-M, metam, metazoxolon, methfuroxam, methyl bromide, methyl isothiocyanate, methylmercury benzoate, methylmercury dicyandiamide, metrafenone, metsulfovax, myclozolin, 2-methoxyethylmercury chloride, nabam, nickel bis(dimethyldithiocarbamate), nitrothal-isopropyl, nuarimol, natamycin, nicobifen, nitrostyrene, octhilinone, ofurace, oxadixyl, oxycarboxin, oxpoconazole fumarate, OCH, Orysastrobin, oxine copper, pefurzoate, penconazole, pencycuron, penthiopyrad, phthalide, piperalin, polyoxins, potassium hydrogen carbonate, probenazole, prochloraz, procymidone, propamocarb hydrochloride, propiconazole, propineb, pyrazophos, pyrifenox, pyrimethanil, pyroquilon, pentachlorophenol (PCP), phenylmercuriurea, phenylmercury acetate, phenylmercury chloride, phenylmercury nitrate, phenylmercury salicylate, phosdiphen, picoxystrobin, polycarbamate, polyoxorim, potassium azide, potassium polysulfide, proquinazid, prothiocarb, prothioconazole, pyracarbolid, pyraclostrobin, pyridinitril, pyroxychlor, pyroxyfur, 2-phenylphenol, quinomethionate, quinoxyfen, quintozene, quinacetol, quinazamid, quinconazole, rabenzazole, sodium hydrogen carbonate, sodium hypochlorite, sulfur, spiroxamine, salicylanilide, silthiofam, simeconazole, sodium azide, sodium orthophenylphenoxide, sodium pentachlorophenoxide, sodium polysulfide, streptomycin, tebuconazole, tecnazene, tetraconazole, thiabendazole, thiadiazin/milneb, thifluzamide, thiophanate-methyl, thiram, tolclofos-methyl, tolylfluanid, triadimefon, toriadimenol, triazoxide, tricyclazole, tridemorph, triflumizole, triforine, triticonazole, TCMTB, tecloftalam, tecoram, thiadifluor, thicyofen, thiochlorfenphim, thiomersal, thiophanate, thioquinox, tiadinil, tioxymid, tolylmercury acetate, triamiphos, triarimol, triazbutil, tributyltin oxide, trichlamide, trifloxystrobin, validamycin, vinclozolin, zinc sulfate, zineb, ziram, zoxamide, zarilamid, zinc naphthenate, echlomezol, and Lentinus edodes mycelia extract.

Bactericides: streptomycin, tecloftalam, oxyterracycline, and oxolinic acid, etc.

Biopesticides: Agrobacterium radiobacter, Pseudomonas fluorescens, Pseudomonas sp. CAB-02, Bacillus subtilis, non-pathogenic Erwinia carotovora subsp. carotovora, Trichodrema sp. (Tricoderma atroviride), Talaromyces flavus, Xanthomonas campestris (Xanthomonas campestris pv. poae), Steinemema carpocapsae, Steinemema glaseri, Verticillium lecanii, Paecilomyces fumosoroseus, Beauveria brongniartii, Pasteuria penetrans, and Monacrosporium phymatophagum, etc.

These other active compounds of agricultural chemicals can be used alone or in combination of two or more of them.

The plant seeds used in the present invention include not only seeds of food crops and seeds of vegetables, but also tubers of potato and the like, tubers of sweetpotato and the like, and bulbs of flowering plants, etc.

The food crops include a family of wheat such as oats, barley, wheat, rye and the like, gramineous crops such as rice, corn and the like, legume crops such as adzuki beans, common beans, peas and the like, other pulses such as broad beans, soy beans, peanuts and the like, potatoes, sweetpotatoes, buckwheat and the like. The vegetables include spinach, turnip, cauliflower, cabbage, komatsuna, Japanese radishes, Chinese cabbage, broccoli, qing geng cai, wasabi, pumpkins, cucumbers, oriental pickling melons, watermelons, melons, burdocks, garland chrysanthemums, romaine lettuce, butterburs, aroids, ginger, Japanese ginger, Japanese parsley, celery, carrots, parsley, Japanese honewort, red peppers, green peppers, tomatoes, eggplants, strawberrys, asparagus, onions, Welsh onions, leeks, garlic, Welsh onions, rakkyo (Allium Chinese), wakegi green onions and the like. Industrial crops include cottons, beets, rapeseeds, sugar canes, sesame, tobaccos, konnyaku and the like. The flowering plants include chrysanthemums, carnations, roses, stocks, gentians, perennial gypsophila, orchids, statices, gerbera daisies, Eustomas, tulips, lilies, gladioluses, freesias, irises, narcissuses, common marigolds, marguerites, sunflower and the like.

In the present invention, the methods for attaching the active compounds of agricultural chemicals (this term means Compound A, cyazofamid, fluazinam, ethaboxam, benthiavalicarb and all of the other active compounds of agricultural chemicals as mentioned above) to a plant seed include a coating and granulation method, a gel coating method (see, JP-A 2002-000011), a dressing treatment and the like to which the present invention is not specifically limited so long as it is a method by which the active compound can be attached to a seed.

The coating and granulation method comprises adhering a coating material composed of an active compound of agricultural chemicals, a binder and the like on the surface of a seed, and then subjecting to blowing drying or forced drying. For this method, several granulation apparatuses such as a seed dresser, a fluidized bed granulator, a rolling granulator, a pan-type granulator and the like can be used. The coating material can contain a dust diluent, a surfactant, a plasticizer, a colorant, a preservative, a water repellent agent, an anticaking agent, antidecomposer and the like, in addition to an active compound of agricultural chemicals, and a binder.

The binder includes a water-soluble binder and a water-insoluble binder.

The water-soluble binder includes for example a modified starch such as dextrin (roasted dextrin and enzyme-modified dextrin, etc.), an acid-disintegrated starch, an oxidized starch, alpha starch, etherized starch (carboxymethyl starch, hydroxyalkyl starch and cation starch, etc.), esterized starch (acetic acid starch, and phosophoric acid starch, etc.), crosslinked starch and grafted starch, and the like, native material such as sodium alginate, gum Arabic, gelatin, gum tragacanth, locust bean gum and casein and the like, cellulose derivative such as carboxymethyl cellulose sodium salt, hydroxyethyl cellulose, hydroxypropyl cellulose, hydroxypropylmethyl cellulose, methylcellulose, ethylcellulose and acetylcellulose and the like, and other polymers such as polyvinyl methyl ether, polyethylene glycol, polypropylene glycol, polyethylene polypropylene block copolymer, polyvinyl alcohol, a copolymer of partially saponified vinyl acetate with vinyl ether, polyvinyl pyrrolidone, a copolymer of polyvinyl pyrrolidone with vinyl acetate, and polyacrylamide and the like.

The water-insoluble binder includes for example a water-insoluble thermoplastic such as polyvinyl acetate, a copolymer of vinyl acetate with ethylene, a copolymer of vinyl acetate with vinyl versatate, a coplymer of vinyl acetate, ethylene and vinyl chloride, polyacrylic acid ester, a copolymer of acrylic acid ester with styrene, a copolymer of acrylic acid ester with silicone, a copolymer of acrylic acid ester with ethylene, polyurethane, a copolymer of styrene with butadiene and a copolymer of acrylonitrile with butadiene, and the like, and a thermosetting resin such as amino resin (urea resin and melamine resin, etc.), phenol resin (resol resin and novolak resin, etc.), resorcinol formaldehyde resin, xylene resin, furan resin, epoxy resin, polyisocyanate-type adhesive, unsaturated polyester and thermosetting acrylic resin, and the like.

The epoxy resin includes for example bisphenol A type epoxy compound, bisphenol F type epoxy compound, novolak type epoxy compound, aliphatic epoxy compound, alicyclic type epoxy compound, glycidylamine type epoxy compound and glycidyl ester type epoxy compound and the like. In addition, the curing agent for the epoxy resin includes for example polyamide type, aliphatic polyamine type, alicyclic polyamine type, aromatic polyamine type and hetrocyclic amine type, etc.

The dust diluent includes for example natural minerals such as quartz, calcite, sepiolite, dolomite, chalk, kaolinite, pyrofilite, sericite, halocite, metahalocite, kibushi-clay, gairome-clay, pottery stone, zeeklite, allophane, shirasu, kira, talc, bentonite, pumite, attapulgite, zeolite and diatomaceous earth, etc., calcined products of natural minerals such as calcined clay, perlite, shirasu balloon, vermiculite, attapulgus clay and calcined diatomaceous earth, etc., inorganic salts such as magnesium carbonate, calcium carbonate, sodium carbonate, sodium hydrogen carbonate, ammonium sulfate, sodium sulfate, magnesium sulfate, diammonium hydrogen phosphate, ammonium dihydrogen phosphate and potassium chloride, etc., saccharides such as glucose, fructose, sucrose and lactose, etc., polysaccharides such as starch, powdery cellulose and dextrin, etc., organic materials such as urea, urea derivatives, benzoic acid and salts of benzoic acid, plants such as wood powder, maiz cob, walnut shell and tobacco stem, etc., fly ash, white carbon and fertilizers, and so on.

The surfactant includes the following (A), (B), (C), (D) and (E).

(A) Nonionic surfactant:

(A-1) Polyethylene glycol type surfactant: for example polyoxyethylene alkyl($C_{12-18}$) ether, ethylene oxide adduct of alkyl naphthol, polyoxyethylene (mono- or di-) alkyl($C_{8-12}$) phenyl ether, formalin condensed product of polyoxyethylene (mono- or di-) alkyl($C_{8-12}$) phenyl ether, polyoxyethylene (mono-, di- or tri-) phenylphenyl ether, polyoxyethylene (mono-, di- or tri-) benzylphenyl ether, polyoxypropylene (mono-, di- or tri-) benzylphenyl ether, polyoxyethylene (mono-, di- or tri-) styrylphenyl ether, polyoxypropylene (mono-, di- or tri-) styrylphenyl ether, polymer of polyoxyethylene (mono-, di- or tri-) styrylphenyl ether, polyoxyethylene polyoxypropylene block polymer, alkyl($C_{12-18}$) polyoxyethylene polyoxypropylene block polymer ether, alkyl($C_{8-12}$) phenylpolyoxyethylene polyoxypropylene block polymer ether, polyoxyethylene bisphenyl ether, polyoxyethylene resin acid ester, polyoxyethylene fatty acid ($C_{12-18}$) monoester, polyoxyethylene fatty acid ($C_{12-18}$) diester, polyoxyethylene sorbitan fatty acid ($C_{12-18}$) ester, glycerol fatty acid ester ethylene oxide adduct, castor oil ethylene oxide adduct, hardened castor oil ethylene oxide adduct, alkyl ($C_{12-18}$) amine ethylene oxide adduct and fatty acid ($C_{12-18}$) amide ethylene oxide adduct, and so on.

(A-2) Polyvalent alcohol type surfactant: for example glycerol fatty acid ester, polyglycerin fatty acid ester, pentaerythrithol fatty acid ester, sorbitol fatty acid ($C_{12-18}$) ester, sorbitan fatty acid ($C_{12-18}$) ester, sucrose fatty acid ester, polyvalent alcohol alkyl ether and fatty acid alkanolamide, and so on.

(A-3) Acetylene based surfactant: for example acetylene glycol, acetylene alcohol, ethylene oxide adduct of acetylene glycol and ethylene oxide adduct of acetylene alcohol, and so on.

(A-4) Other surfactant: for example alkylglycoside, and so on.

(B) Anionic surfactant:

(B-1) Carboxylic acid type surfactant: for example carboxylic acid such as polyacrylic acid, polymethacrylic acid, polymaleic acid, a copolymer of maleic acid with olefin (for example isobutylene and diisobutylene, etc.), a copolymer of acrylic acid with itaconic acid, a copolymer of methacrylic acid with itaconic acid, a copolymer of maleic acid with styrene, a copolymer of acrylic acid with methacrylic acid, a copolymer of acrylic acid with methyl acrylate, a copolymer of acrylic acid with vinyl acetate, a copolymer of acrylic acid with maleic acid, N-methyl-fatty acid ($C_{12-18}$) sarcocinate, resin acid and fatty acid ($C_{12-18}$), and so on, and salts of these carboxylic acids.

(B-2) Sulfuric acid ester type surfactant: for example sulfuric acid ester such as alkyl($C_{12-18}$) sulfuric acid ester, polyoxyethylene alkyl ($C_{12-18}$) ether sulfuric acid ester, polyoxyethylene (mono- or di-) alkyl($C_{8-12}$) phenyl ether sulfuric acid ester, sulfuric acid ester of polyoxyethylene (mono- or di-) alkyl($C_{8-12}$) phenyl ether polymer, polyoxyethylene (mono-, di- or tri-) phenylphenyl ether sulfuric acid ester, polyoxyethylene (mono-, di- or tri-) benzylphenyl ether sulfuric acid ester, polyoxyethylene (mono-, di- or tri-) styrylphenyl ether sulfuric acid, sulfuric acid ester of polyoxyethylene (mono-, di- or tri-) styrylphenyl ether polymer, sulfuric acid ester of polyoxyethylene polyoxypropylene block polymer, sulfated oil, sulfated fatty acid ester, sulfated fatty acid and sulfated olefin, and so on, and salts of these sulfuric acid esters.

(B-3) Sulfonic acid type surfactant: for example sulfonic acid such as paraffin ($C_{12-22}$) sulfonic acid, alkyl($C_{8-12}$) benzene sulfonic acid, formalin condensed product of alkyl($C_{8-12}$) benzene sulfonic acid, formalin condensed product of cresol sulfonic acid, α-olefin ($C_{14-16}$) sulfonic acid, dialkyl ($C_{8-12}$) sulfosuccic acid, lignin sulfonic acid, polyoxyethylene (mono- or di-) alkyl($C_{12-18}$)phenyl ether sulfonic acid, polyoxyethylene alkyl($C_{12-18}$) ether sulfosuccinic acid half ester, naphthalene sulfonic acid (mono- or di-) alkyl($C_{1-6}$) naphthalene sulfonic acid, formalin condensed product of naphthalene sulfonic acid, formalin condensed product of (mono- or di-) alkyl($C_{1-6}$) naphthalene sulfonic acid, formalin condensed product of creosote oil, alkyl($C_{8-12}$) diphenylether disulfonic acid, Igepon T (trade name), polystyrene sulfonic acid and a copolymer of styrene sulfonic acid with methacrylic acid, and so on, and salts of these sulfonic acids.

(B-4) Phosphoric acid ester type surfactant: for example phosphoric acid ester such as alkyl($C_{8-12}$) phosphoric acid ester, polyoxyethylene alkyl($C_{12-18}$) ether phosphoric acid ester, polyoxyethylene (mono- or di-) alkyl($C_{8-12}$) phenyl ether phosphoric acid ester, phosphoric ester of polyoxyethylene (mono-, di- or tri-) alkyl($C_{8-12}$) phenyl ether polymer, polyoxyethylene (mono-, di- or tri-) phenylphenyl ether phosphoric acid ester, polyoxyethylene (mono-, di- or tri-) benzylphenyl ether phosphoric acid ester, polyoxyethylene (mono-, di- or tri-) styrylphenyl ether phosphoric acid ester, phosphoric acid ester of polyoxyethylene (mono-, di- or tri-) styrylphenyl ether polymer, phosphoric acid ester of polyoxyethylene polyoxypropylene block polymer, phosphatidyl choline, phosphatidyl ethanol imine and condensed phosphoric acid (for example trispoly phosphoric acid, etc.), and so on and salts of these phosphoric acid ester.

The salts in the above-mentioned (B-1) to (B-4) include alkali metals (lithium, sodium and potassium, etc.), alkaline earth metals (calcium and magnesium, etc.), ammonium and several amines (for example alkyl amine, cycloalkyl amine and alkanol amine, etc.), and so on.

(C) Cationic surfactant:

The cationic surfactant includes for example alkyl amine salts and alkyl quaternary ammonium salt, and so on.

(D) Amphoteric surfactant:

The amphoteric surfactant includes for example betaine type surfactant and amino acid type surfactant, and so on.

(E) Other surfactant:

Other surfactant includes for example silicone based surfactant and fluorine based surfactants, and so on. These surfactants can be used alone or in combination of two or more of them.

The formulation example of the coating material is as follows. In the meantime, in the following formulation example, "part" means parts by weight.

| [Formulation example of coating material for coating and granulation seed] | |
| --- | --- |
| Active compound of agricultural chemicals | 0.1-80 parts |
| Binder | 0.1-30 parts |
| Dust diluent | 0-99.8 parts |
| Surfactant | 0-30 parts |
| Others | 0-30 parts |

As others, for example, a plasticizer, a colorant, a preservative, a water repellent agent, an anticaking agent, an antidecomposer or the like can be included.

The gel coating method is a method that has developed for further improving germination promotion of plant seeds, and prevention of growth insufficiency and growth promotion after sowing, and requires to enclose plant seeds into an aqueous gel capsule.

The aqueous gel forming the capsule includes sodium alginate, gellan gum, xanthane gum, locust bean gum, carboxymethyl cellulose, pectin, gelatin, carrageenan, sodium polyacrylate and agar, and so on. Some of these gels require the presence of a metal ion for gelation. When such a gel is used, a salt, an alkali or the like that provides the metal ion is suitably added. Further, several preservatives, fertilizer components, growth accelerators and the like can be suitably added.

For example, the aqueous gel capsule containing seed can be produced by forming a liquid drop of an aqueous solution having an aqueous gel forming polymer at the tip of a narrow tube, adding one or more seeds into the liquid drop by use of a narrow tube, and then adding dropwise it into a coagulation liquid having an action of making the liquid drop coagulate. In this case, gas such as air, oxygen or the like can be enclosed, if necessary.

The coagulation liquid includes a liquid containing divalent metal such as calcium, barium or the like, or ion of aluminum or the like, and the salts of them, for example lactic acid salts (these are solid) and an aqueous solution thereof are used. In addition, potassium aluminum sulfate (potassium alum) aqueous solution can be also used.

The formulation example is as follows. In the meantime, in the following formulation example, "part" means parts by weight.

| [Formulation example of aqueous gel capsule] | |
| --- | --- |
| Active compound of agricultural chemicals | 0.1-50 parts |
| Plant seed | 5-94.8 parts |
| Gel-forming polymer | 0.1-10 parts |

(continued)

| [Formulation example of aqueous gel capsule] | |
|---|---|
| Coagulation liquid | 0-5 parts |
| Water | 5-50 parts |
| Others | 0-30 parts |

As others, for example, a fertilizer component, a colorant, an anticaking agent, a preservative, an antidecomposer or the like can be included.

The dressing treatment is a method in which a dust formulation or a wettable powder containing an active compound of agricultural chemicals is directly sprinkled on a plant seed, and in principle, the method comprises stirring a seed wetted with water or a seed as such with a solid or liquid agricultural formulation in a container to attach an active compound of agricultural chemicals on the surface of the seed or inside the seed.

The dressing treatment in the present invention includes dust coating method, slurry method and liquid agent immersion method.

The treating formulation for dressing plant seeds may be an agricultural formulation as such or be prepared by diluting it with water. The agricultural formulations include, for example, soluble concentrate, emulsifiable concentrate, wettable powder, water soluble powder, water dispersible granule, water soluble granule, suspension concentrate, concentrated emulsion, suspoemulsion, microemulsion, and gel, and so on.

The above-mentioned agricultural formulation can be obtained through mixing with an appropriate solid or liquid carrier and further, if desirable, adding a surfactant, a penetrant, a spreader, a thickener, a cryoprotectant, a binder, an anticaking agent, a disintegrant, an antifoamer, a preservative and an antidecomposer, and so on.

The solid carriers include for example natural minerals such as quartz, kaolinite, pyrophylite, sericite, talc, bentonite, acid clay, attapulgite, zeolite, and diatomaceous earth, etc., inorganic salts such as calcium carbonate, ammonium sulfate, sodium sulfate, and potassium chloride, etc., synthetic silica and synthetic silicate, natural polymers such as wheat, starch, crystal cellulose, calboxymethyl cellulose, and gelatin, etc., saccharides such as glucose, mantose, lactose, and sucrose, etc., and urea, and so on. Liquid carriers include for example alcohols such as ethylene glycol, propylene glycol, and isopropanol, etc., aromatic hydrocarbons such as xylene, alkylbenzen and alkyl naphthalene, etc., ethers such as butyl cellosolve, etc.; ketones such as cyclohexanone, etc., esters such as $\gamma$-butylolactone, etc., acid amides such as N-methylpyrrolidone and N-octylpyrrolidone, etc., vagetable oils such as soybean oil, rapeseed oil, cottonseed oil, and castor oil, etc., and water.

These solid and liquid carriers can be used alone or in combination of two or more of them.

Surfactants include surfactants exemplified for the coating and granulation method. The surfactants can be used alone or in combination of two or more of them.

Examples of agricultural formulations that can be used as the treating formulation for dressing plant seeds are as follows. In the following examples, "parts" mean parts by mass.

| [Wettable powder] | |
|---|---|
| Active compound of agricultural chemicals | 0.1-80 parts |
| Solid carrier | 5-98.9 parts |
| Surfactant | 1-10 parts |
| Others | 0-5 parts |

As others, for example, an anticaking agent, an antidecomposer or the like can be included.

| [Emulsifiable concentrate] | |
|---|---|
| Active compound of agricultural chemicals | 0.1-30 parts |
| Liquid carrier | 45-90 parts |
| Surfactant | 4.9-15 parts |
| Others | 0-10 parts |

As others, for example, a spreader, an antidecomposer or the like can be included.

[Suspension concentrate]
| | |
|---|---|
| Active compound of agricultural chemicals | 0.1-70 parts |
| Liquid carrier | 15-98.89 parts |
| Surfactant | 1-12 parts |
| Others | 0.01-30 parts |

As others, for example, a cryoprotectant, a thickener or the like can be included.

[Water dispersible granule]
| | |
|---|---|
| Active compound of agricultural chemicals | 0.1-90 parts |
| Solid carrier | 0-98.9 parts |
| Surfactant | 1-20 parts |
| Others | 0-10 parts |

As others, for example, a binder, an antidecomposer or the like can be included.

[Soluble concentrate]
| | |
|---|---|
| Active compound of agricultural chemicals | 0.01-70 parts |
| Liquid carrier | 20-99.99 parts |
| Others | 0-10 parts |

As others, for example, a cryoprotectant, a spreader or the like can be included.

In the dust coating method, the above-mentioned solid formulation as such can be used. The dust coating method comprises stirring plant seeds with a solid formulation such as a dust formation or a wettable powder in a container to attach an active compound of agricultural chemicals to the plant seeds.

The method for dressing seeds with a liquid formulation or a liquid obtained by diluting a solid formulation with water includes slurry method and liquid agent immersion method. The slurry method is an improved one of the dust coating method, and comprises dipping a solid formulation in a small amount of water (to give a slurry or liquid state), stirring it with seeds in a container to attach an active compound of agricultural chemicals to the seeds.

The liquid formulation as such or the liquid formulation diluted with water can be used.

The liquid agent immersion method is a method in which plant seeds are immersed by placing a formulation as such or a solution of the formulation diluted with water in a container to permeate the formulation inside the seeds. After immersing in the liquid formulation, the seeds may be dried in air. The time for immersion is not specifically limited. When diluting is carried out, surfactants or the like can be added in addition to water.

For the dressing treatment, a mixer for treating seeds, a fertilizer mixer, a plastic bag, or a plastic sheet can be used, and the kind of the container is not specifically limited.

The seeds subjected to dressing treatment may be dried and preserved, or sown without drying.

In a case where the plant seeds are treated with the above-mentioned agricultural formulations according to slurry method or liquid agent immersion method, the agricultural formulations can be generally diluted from 1- to 20000-fold with water and applied.

It is desirable that the amount of active compound of agricultural chemicals that is attached according to coating and granulation method, gel coating method or dressing treatment is 1 to 10000 parts by weight per 100 kg of seeds.

In addition, in the present invention, other fungicides, herbicides, insecticides, plant growth regulators or fertilizers can be applied simultaneously with sowing of treated seeds.

As the treating formulation for applying to cultivation soil between pre-sowing and post-covering with soil in the present invention, formulations that can be used for the above-mentioned dressing treatment or those obtained by diluting them with water can be used. When dilution is carried out, it is desirable to generally dilute from 1- to 20000-fold with water and use.

The present invention covers preferably the following three phases, during each of which an application to cultivation soil between pre-sowing and post-covering with soil is made. The method of applying the treating formulation in each phase is as follows:

- First phase: Pre-sowing

  A chemical solution is sprayed over field to be cultivated. After treatment with the chemical solution, mixing is performed or is not performed.

- Second phase: Post-sowing, but before covering with soil

  A chemical solution is irrigated or sprayed over seeds sown on soil (planting hole) or sowed ditch, then these seeds are covered with soil.

- Third phase: Post-sowing and immediate after covering with soil

  A chemical solution is irrigated or sprayed over the surface of cover soil.

It is desirable that the amount of treating water in the second phase is 0.0001 ml to 250 ml per seed. In a case where the treating formulation is solid, the used amount thereof is desirably 0.0001 to 50 parts by weight per seed. In addition, the amount of the active compound of agricultural chemicals is desirably 0.00001 to 10 parts by weight per seed.

It is desirable that the amount of the active compound of agricultural chemicals in the first and third phases is 0. 1 to 1000 parts by weight per 10 are.

The method of the present invention can be applied for diseases causing in paddy, field and a nursery of seedlings. Specific diseases that can be controlled are as follows, but the present invention is not limited to them.

That is, the diseases include the followings:

Seeding blight for rice (Pythium irregulare, P. graminicola), wheat yellow mosaic (Wheat yellow mosaic virus), barley yellow mosaic (Barley yellow mosaic virus), powdery mildew (Erysiphe graminis f. sp. Hordei, f. sp. tritici), Stripe (Pyrenophora graminea), net blotch (Pyrenophora teres), fusarium blight (Gibberella zeae), Rust (Puccinia striiformis, P. graminis, P. recondite, P. hordei), browing root rot (Pythium iwayamai), snow blight (Tipula sp., Micronectriella nivais), loose smut (Ustilago tritici, U. nuda), eye spot (Pseudocercosporella herpotrichoides), leaf blotch (Rhynchosporium secalis), speckled leaf blotch (Septoria tritici), glume blotch (Leptosphaeria nodorum), eye spot (Pseudocercosporella herpotrichoides), typhula snow blight (Typhula incarnata), sclerotinia snow blight (Myriosclerotinia borealis) for wheats, snow mold (Monographella nivalis), take-all (Gaeumanomyces graminis) for wheat;

Downy mildew (Pseudoperenospora cubensis), anthracnose (Colletotrichum orbicula), powdery mildew (Sphaerotheca fuliginea), gummy stem blight (Didymella bryoniae), Fusarium wilt (Fusarium oxysporum), gray mold (Botrytis cinerea), cottony rot (Sclerotinia sclerotiorum), damping-off (Fusarium solani), and southern blight (Sclerotium rolfsii) for gourd;

Corynespora leaf spot (Corynespora cassiicola), seedling damping-off (Pythium cucurbitacearum, P. debaryanum, Rhizoctonia solani), root rot (Pythium myriotylum, P. volutum), phytophthora blight (Phytophthora meronis, P. nicotianae), bacterial leaf spot (Pseudomonas syringae pv. lachrymans), and violet root rot (Helicobasidium mompa) for cucumber;

Brown rot (Phytophthora capsici) and Phytophthora blight (Phytophthora cryptogea) for watermelon;

Damping-off(Pythium debaryanum) and Phytophthora blight (Phytophthora nicotianae) for melon;

Phytophthora blight (Phytophthora capsici) for pumpkin;

Bacterial wilt (Ralstonia solancearum), wilt (Fusarium oxysporum), gray mold (Botrytis cinerea), cottony rot (Sclerotinia sclerotiorum), southern blight (Sclerotium rolfsii) for Solanaceae;

Phytophthora blight (Phytophthora infestans), Phytophthora root rot (Phytophthora cryptogea), gray rot (Phytophthora capsici), ring rot (Alternaria solani), leaf mold (Fulvia fulva), powdery mildew (Oidium sp. and Oidiopsisi sicula), brown rot (Phytophthora nicotianae), bacterial canker (Clavibacter michiganensis), brown root rot (Pyrenochaeta lycopersici), anthracnose (Colletotrichum gloeosporioides), seedling damping-off (Pythium vexans, Rhizoctonia solani), Verticillium wilt (Verticillium dahliae), leaf spot (Stemphylium lycopersici) for tomatoes;

Late blight (Phytohthora infestans), early blight (Alternaria solani), black scurf (Thanatephorus cucumeris), black leg (Erwinia carotovora), common scab (Streptomyces spp.), bacterial soft rot (Erwinia carotovora), powdery scab (Spongospora subterranean);

Phytophthora blight (Phytophthora capsici), powdery mildew (Oidiopsis sicula), seedling damping-off(Rhizoctonia solani), leaf spot (Cercospora capsici) for green pepper;

Phytophthora blight (Phytophthora infestans), brown rot (Phytophthora capsici), brown spot (Phomopsis vexans), powdery mildew (Erysiphe cichoracerum and Oidiopsis sicula) for egg-plants;

Blight and rot (Phytophthora porri), Phytophthora blight (Phytophthora nicotianae), southern blight (Sclerotium rolfsii), seedling damping-off (Rhizoctonia solani), black spot (Alternaria porri), soft rot (Erwinia carotovora and E. chrysanthmi), downy mildew (Peronospora destructor), rust (Puccinia allii) for green onions;

Wilt (Fusarium oxysporum), yellow spot (Heterosporium allii), red root rot (Pyrenochaeta terrestris), small sclerotial rot (Botrytis squamosa) for Welsh onions;

Dry rot (Fusarium oxysporum), flag smut (Urocystis cepulae), leaf blight (Ciborinia alli), gray mold (Botrytis cinerea), gray-mold neck rot (Botrytis allii), soft rot (Erwinia rhapontici), scale rot (Burkholderia gladiol) for onions;

Downy mildew (Peronospora parasitica), clubroot (Plasmodiophora brassicae), white rust (Albugo macrospora), black spot (Alternaria japonica and A. brassicae), white leaf spot (Cercosporella brassicae), soft rot (Erwinia carotovora), cottony rot (Sclerotinia sclerotiorum) for cruciferous vegetables;

Foot rot (Thanatephorus cucumeris), Verticillium wilt (Verticillium dahliae) for cabbage;

Yellows (Verticillium dahliae), blossom-end rot (Rhizoctonia solani), black root (Aphanomyces raphani), gray mold (Botrytis cinerea), Pythium rot (Pythium ultimum) for Chinese cabbage;

Anthracnose (Colletotrichum higginsianum), Verticillium black spot (Verticillium albo-atrum) for Japanese radish;

Bacterial wilt (Ralstonia solanacearum), wilt (Verticillium dahliae), cottony rot (Sclerotinia sclerotiorum), black root (Thielaviopsis sp.), rust (Phakopsora pachyrhizi), southern blight (Sclerotium rolfsii), damping-off (Fusarium oxysporum), anthracnose (Colletotrichum truncatum, C. trifolii, Glomerella glycines, Gloeosporium sp.), gray mold (Botrytis cinerea) for beans;

Downy mildew (Peronospora manshurica), stem rot (Phytophthora sojae), leaf blight (Xanthomonas campestris pv. glycines), purple stain (Cercospora kikuchii), sphaceloma scab (Elsinoe glycines), melanose (Diaporthe phaseolorum) for soybean;

Leaf spot (Mycosphaerella personata), Corynespora leaf spot (Mycosphaerella arachidis) for peanut;

Powdery mildew (Erysiphe pisi) for garden peas;

Powdery mildew (Sphaerotheca aphanis), yellow dwarf (Fusarium oxysporum), wilt (Verticillium dahliae), Phytophthora blight (Phytophthora cactorum), bacterial angular leaf spot (Xanthomonas campestris and X. fragariae), black spot (Alternaria alternate), leaf spot (Mycosphaerella fragariae), anthracnose (Colletotrichum acutatum, C. fragariae and Glomerella cingulata), root rot (Phytophthora fragariae), gray mold (Botrytis cinerea), bud blight (Rhizoctonia solani), ring spot (Drenerophoma obscurans) for strawberry;

Cottony rot (Sclerotinia sclerotiorum), bottom rot (Rhizbacter solani), soft rot (Erwinia carotovora), damping-off (Pythium sp.), root rot (Fusarium oxysporum), gray mold (Botrytis cinerea), bacterial leaf spot (Xanthomonas campestris pv. vitians), big-vein (Lettuce big-vein virus), rot (Pseudomonas cichorii, P. marginalis pv. Marginalis and P. viridiflava), downy mildew (Bremia lactucae) for lettuce;

Wilt (Fusarium oxysporum), black scarf (Rhizoctonia solani), black streak (Itersonilia perplexans), bacterial black spot (Xanthomonas campestris pv nigromaculans), black spot (Ascochyta phaseolorum), root rot (Pythium irregulare), violet root rot (Helicobasidium mompa) for burdock;

Wilt (Fusarium oxysporum), powdery mildew (Erysiphe heraclei), black leaf blight (Alternaria dauci), bacterial gall (Rhizoctonia dauci), brown-blotted root rot (Pythium sulcatum), southern blight (Sclerotium rolfsii), soft rot (Erwinia carotovora), root rot (Rhizoctonia solani), leaf spot (Cercospora carotae), violet root rot (Helicobasidium mompa) for carrots;

Damping-off (Phthium aphanidermatum, P. ultimum, P. paroecandrum) for spinach,

Root rot (Pythium aristosporum, P. ultimum) for konnyaku;

Brown spot (Altemaria altemata), powdery mildew (Erysiphe cichoracearum), anthracnose (Colletotrichum cichoracearum), bed rot (Pythium debaryanum, P. aphanidermatum), black shank (Phytophthora nicotianae var. nicotianae) for tobacco;

Corynespora leaf spot (Cercospora beticola), necrotic yellow vein (Beet necrotic yellow vein virus), black root (Aphanomyces cochlioidea) for sugar beet;

Scab (Diplocarpon rosae), powdery mildew (Sphaerotheca pannosa) for roses; and

Corynespora leaf spot (Septoria chrysanthemiindici), white rust (Puccinia horiana) for chrysanthemum.

The diseases against which the present invention exerts a higher effect include seedling damping-off, downy mildew, late blight, stem rot, root rot and black root that Mastigomycotina causes, and clubroot that clubroot fungus causes.

Examples

Usefulness of the present invention is concretely described through the following Test Examples to which the present invention is not limited. In the meantime, "g ai" means weight (in gram) of an active compound of agricultural chemical in gram.

[Test Example 1] A test for effect controlling clubroot of Chinese cabbages by coating and granulation seed

In healthy soil, resting spores of clubroot fungus of cruciferous vegetables were added in a rate of 1 x 10$^4$/1 g of soil to prepare polluted soil being soil to be tested.

Two seeds of Chinese cabbage prepared according to Seed-Formulation Examples 1 and 2 described below were sown in the soil to be tested.

The plants were grown at room temperature (controlled at 20°C) for 4 weeks, and then the degree of epiphytation of clubroot on the roots was examined to evaluate the incidence of disease according to the following equation.
$$\text{Incidence of disease} = [\Sigma(\text{incidence index} \times \text{diseased plants for each grade of severity})/(\text{examined plants} \times 3)] \times 100$$

[Incidence index]

0: No club epiphytation
0.5: A little club formation on the lateral roots
1: Club formation on the lateral root
2: Small club formation on the taproot
3: Club formation on the lateral roots and taproot

The results are shown in Table 1.
Table 1

| | Treatment Amount (g ai/100 kg seed) | Applied Amount (g ai/10a) | Incident of Disease (%) |
|---|---|---|---|
| Compound A coating-granulation seed | 6600 | 110 | 7 |
| Compound A coating-granulation seed | 3300 | 55 | 7 |
| No treatment seed | - | - | 100 |

[Seed-Formulation Example 1]

11.6 parts by weight of powdery product obtained by milling 50% water dispersible granule of Compound A in a mortar, and 88.0 parts by weight of Chinese cabbage seed (Muso) were mixed with stirring. Further, an aqueous solution prepared by diluting 0.4 part by weight of Toxanon GL-31 A (manufactured by Sanyo Chemical Industries, Ltd.) with 8.4 parts by weight of water was added, and mixed with stirring. The resulting wet product was dried further at about 50°C over 1 hour to obtain a seed that which Compound A was coated and granulated in a rate of 6600 g ai/100 kg seed (11 g of coated Chinese cabbage seed containing 0.22 mg of Compound A per seed).

[Seed-Formulation Example 2]

5.8 parts by weight of powdery product obtained by milling 50% water dispersible granule of Compound A in a mortar, 5.8 parts by weight of ASP200 (manufactured by Engelhard Corp.) and 88.0 parts by weight of Chinese cabbage seed (Muso) were mixed with stirring. Further, an aqueous solution prepared by diluting 0.4 part by weight of Toxanon GL-31A with 8.4 parts by weight of water was added, and mixed with stirring. The resulting wet product was dried further at about 50°C over 1 hour to obtain a seed that which Compound A was coated and granulated in a rate of 3300 g ai/ 100 kg seed (11 g of coated Chinese cabbage seed containing 0.11 mg of Compound A per seed).

[Test Example 2] A test for effect controlling clubroot of Chinese cabbages by slurry treatment

In healthy soil, resting spores of clubroot fungus of cruciferous vegetables were added in a rate of $2 \times 10^6/1$ g of soil to prepare polluted soil being soil to be tested.
A Chinese cabbage seed was dipped in a suspension concentrate of Compound A prepared according to Formulation Example 1 described below for 2 seconds, dried in air on aluminum foil for 1 hour to obtain a seed painted in a rate of Compound A 6600 g ai/100 kg seed (coated Chinese cabbage seed containing 0.22 mg of Compound A per seed). Similarly, a slurry treatment with a suspension concentrate of cyazofamid (Ranman flowable (trade name) manufactured by Ishihara Sangyo Kaisha, Ltd.) was carried to obtain a seed painted in a rate of cyazofamid 3300 g ai/100 kg seed (coated Chinese cabbage seed containing 0.11 mg of cyazofamid per seed).

Each of Chinese cabbage seeds treated with chemical formulation was sown in 1/25000 a pot in which the polluted soil was filled.

Mixing with soil is carried out by adding Compound A dust formulation prepared according to Formulation Example 2 described below in the polluted soil in a prescribed amount, and mixing, and the mixed soil was filled in a pot and each Chinese cabbage seed was sown in the soil in a pot.

The plants were grown at room temperature (controlled at 20°C) for 4 weeks, and then the degree of epiphytation of clubroot on the roots was examined to evaluate the incidence of disease according to the following equation.

Incidence of disease = $[\Sigma$(incidence index x diseased plants for each grade of severity)/(examined plants x 3)] x 100

[Incidence index]

0: No club epiphytation
0.5: A little club formation on the lateral roots
1: Club formation on the lateral root
2: Small club formation on the taproot
3: Club formation on the lateral roots and taproot

The results are shown in Table 2.

Table 2

|  | Treatment Amount (g ai/100 kg seed) | Applied Amount (g ai/10a) | Incident of Disease (%) |
|---|---|---|---|
| Compound A painted seed | 6600 | 55 | 8.3 |
| Cyazofamid painted seed | 3300 | 27.5 | 9.7 |
| No treatment seed | - | - | 100.0 |
| Compound A dust formulation | - | - | 12.5 |

[Formulation Example 1]
| | |
|---|---|
| (1) Compound A | 20 parts by weight |
| (2) Polyoxyethylenestyryl ether/polyoxyethylenepolyoxypropylene block polymer mixture | 3 parts by weight |
| (3) Magnesium aluminum silicate | 0.3 part by weight |
| (4) Xanthan gum | 0.15 part by weight |
| (5) 1,2-benzisothiazolin-3-on | 0.1 part by weight |
| (6) Propylene glycol | 10 parts by weight |
| (7) Silicone based antifomer | 0.1 part by weight |
| (8) Distilled water | Balance |

The above-mentioned (1) to (8) were mixed and wet-milled until the average particle diameter of Compound A became 1.5 $\mu$m to obtain a suspension concentrate,

[Formulation Example 2]
| | |
|---|---|
| Compound A | 0.5 part |
| Neocarrier K | 95.5 parts |
| Carplex | 2 parts |

(continued)

[Formulation Example 2]

Glycerin          2 parts

[Test Example 3] A test for effect controlling clubroot of rapeseed by slurry treatment

In healthy soil, resting spores of clubroot fungus of cruciferous vegetables were added in a rate of $2 \times 10^6/1$ g of soil to prepare polluted soil being soil to be tested.

A rapeseed seed was dipped in a suspension concentrate of Compound A prepared according to Formulation Example 1 for 2 seconds, dried in air on aluminum foil for 1 hour to obtain a seed painted in a rate of Compound A 6600 g ai/100 kg seed (coated rapeseed seed containing 0.22 mg of Compound A per seed).

A suspension concentrate of cyazofamid was similarly treated to obtain a seed painted in a rate of cyazofamid 3300 g ai/100 kg seed (coated rapeseed seed containing 0.11 mg of cyazofamid per seed).

Two rapeseed seeds treated as mentioned above were sown in 1/25000 a pot in which the polluted soil was filled.

The plants were grown at room temperature (controlled at 20°C) for 4 weeks, and then the degree of epiphytation of clubroot on the roots was examined to evaluate the incidence of disease according to the following equation.

Incidence of disease = [Σ(incidence index x diseased plants for each grade of severity)/(examined plants x 3)] x 100

[Incidence index]

0: No club epiphytation
0.5: A little club formation on the lateral roots
1: Club formation on the lateral root
2: Small club formation on the taproot
3: Club formation on the lateral roots and taproot

The results are shown in Table 3.

Table 3

|  | Treatment Amount (g ai/100 kg seed) | Applied Amount (g ai/10a) | Incident of Disease (%) |
|---|---|---|---|
| Compound A painted seed | 6600 | 110 | 19.8 |
| Cyazofamid painted seed | 3300 | 55 | 14.6 |
| No treatment seed | - |  | 100.0 |

[Test Example 4] A test for effect controlling phytophthora blight of green pepper by slurry treatment

Twenty (20) green pepper seeds (variety: Kyomidori) (150 mg) were dipped for 2 minutes in 30 μl of a chemical solution obtained by diluting a suspension concentrate of Compound A prepared according to Formulation Example 1 with water in 133-fold, dried in air on aluminum foil for 1 hour to obtain seeds painted in a rate of Compound A 100 g ai/ 100 kg seed (coated seed containing 0.0075 mg of Compound A per seed).

Similarly, seeds were treated also with a chemical solution diluted in 1330fold to obtain seeds painted in a rate of Compound A 10 g ai/100 kg seed (coated seed containing 0.00075 mg of Compound A per seed).

A suspension concentrate of cyazofamid was diluted in 65-fold, and according to a similar method, seeds painted in a rate of cyazofamid 100 g ai/100 kg seed were obtained.

Healthy soil was filled in 1/25000 a pot, and the above-mentioned seeds were sown in a rate of 5 seeds/pot. After sowing, zoosporangium suspension liquid of Phytophthora capsici controlled in a rate of $1 \times 10^3/ml$ was sprayed and inoculated on the surface of soil in a rate of 10 ml/pot. The seedlings were grown at room temperature (controlled at 25°C), and on 49 days after sowing, the number of infected plants was counted to evaluate the incidence of disease according to the following equation.

$$\text{Incidence of disease} = (\text{infected number in treated area})/\text{sown number}) \times 100$$

The results are shown in Table 4.
Table 4

|  | Treatment Amount (g ai/100 kg seed) | Applied Amount (g ai/10a) | Incident of Disease (%) |
|---|---|---|---|
| Compound A painted seed | 100 | 9.375 | 10 |
| Compound A painted seed | 10 | 0.9735 | 17.5 |
| Cyazofamid painted seed | 10 | 9.375 | 10 |
| No treatment seed | - | - | 57.5 |

[Test Example 5] A test for effect controlling clubroot of Chinese cabbage by post-sowing and pre-covering with soil treatment with liquid formulation

In healthy soil, resting spores of clubroot fungus of cruciferous vegetables were added in a rate of $1 \times 10^5/1$ g of soil to prepare polluted soil being soil to be tested.

A chemical solution was prepared by diluting a suspension concentrate of Compound A prepared according to Formulation Example 1 with water so that a concentration of Compound A became 100 ppm. Three (3) seeds were sown in 1/25000 a pot in which the polluted soil was filled.

The plants were grown at room temperature (controlled at 20°C) for 4 weeks, and then the degree of epiphytation of clubroot on the roots was examined to evaluate the incidence of disease according to the following equation.

$$\text{Incidence of disease} = [\Sigma(\text{incidence index} \times \text{diseased plants for each grade of severity})/(\text{examined plants} \times 3)] \times 100$$

[Incidence index]

0: No club epiphytation
0.5: A little club formation on the lateral roots
1: Club formation on the lateral root
2: Small club formation on the taproot
3: Club formation on the lateral roots and taproot

The results are shown in Table 5.
Table 5

|  | Treatment Amount (ml/one seed) | Applied Amount (g ai/10a) | Incident of Disease (%) |
|---|---|---|---|
| Compound A 100 ppm | 2 | 150 | 1.4 |
| Compound A 100 ppm | 1 | 75 | 2.8 |
| Compound A 100 ppm | 0.5 | 37.5 | 18.1 |
| No treatment seed | - | - | 100.0 |

[Test Example 6] A test for effect controlling clubroot of Chinese cabbage by post-sowing and pre-covering with soil treatment with solid formulation

In healthy soil, resting spores of clubroot fungus of cruciferous vegetables were added in a rate of $1 \times 10^4/1$ g of soil to prepare polluted soil being soil to be tested.

Planting hole treatment was carried out as follows. Three holes (diameter: 1 cm, depth: 1 cm) were made on soil to be tested in a pot, and one Chinese cabbage seed was sown in the hole and the planting holes were treated with a dust formulation of Compound A prepared according to Formulation Example 2. After treatment with the formulation, the holes were covered with soil.

Post-sowing and pre-covering with soil treatment was carried out as follows. Three (3) seeds were sown on the surface of soil to be tested in a pot and a dust formulation of Compound A prepared according to Formulation Example 2 was sprayed uniformly over the surface, and soil was covered in a depth of 1 cm.

The plants were grown at room temperature (controlled at 20°C) for 4 weeks, and then the degree of epiphytation of clubroot on the roots was examined to evaluate the incidence of disease according to the following equation.

$$\text{Incidence of the disease} = [\Sigma(\text{incidence index} \times \text{diseased plants for each grade of severity})/(\text{examined plants} \times 3)] \times 100$$

[Incidence index]

0: No club epiphytation
0.5: A little club formation on the lateral roots
1: Club formation on the lateral root
2: Small club formation on the taproot
3: Club formation on the lateral roots and taproot

The results are shown in Table 6.

Table 6

|  | Treatment Amount (g ai/10 a) | Applied Amount Per Seed (mg/pot) | Incident of Disease (%) |
|---|---|---|---|
| Compound A Dust Formulation | 75 | 20 | 0 |
| Planting hole treatment 3 points/pot | 37.5 | 10 | 9.7 |
| Compound A Dust Formulation | 150 | - | 4.2 |
| Post-sowing/pre-covering with soil treatment | 75 | - | 16.7 |
| Compound A Dust Formulation | 150 | - | 1.4 |
| Full surface soil mixing treatment | 75 | - | 1.4 |
| No treatment seed | - | - | 100 |

[Test Example 7] A test for effect controlling clubroot of Chinese cabbage by irrigation treatment after covering with soil

In healthy soil, resting spores of clubroot fungus of cruciferous vegetables were added in a rate of $1 \times 10^5/1$ g

of soil to prepare polluted soil being soil to be tested.

A chemical solution was prepared by diluting a suspension concentrate of Compound A prepared according to Formulation Example 1 with water. Three (3) seeds were sown in 1/25000 a pot in which the polluted soil was filled, and the seeds were covered with soil, and then 5 ml of the chemical solution was irrigated on the whole surface of soil in the pot.

The plants were grown at room temperature (controlled at 20°C) for 4 weeks, and then the degree of epiphytation of clubroot on the roots was examined to evaluate the incidence of disease according to the following equation.

$$\text{Incidence of disease} = [\Sigma(\text{incidence index x diseased plants for each grade of severity})/(\text{examined plants x 3})] \times 100$$

[Incidence index]

0: No club epiphytation
0.5: A little club formation on the lateral roots
1: Club formation on the lateral root
2: Small club formation on the taproot
3: Club formation on the lateral roots and taproot The results are shown in Table 7.

Table 7

|  | Treatment Amount (ml/one seed) | Applied Amount (g ai/10a) | Incident of Disease (%) |
|---|---|---|---|
| Compound A 100 ppm | 5 | 125 | 0 |
| Compound A 50 ppm | 5 | 62.5 | 1.4 |
| Compound A 10 ppm | 5 | 12.5 | 18.1 |
| No treatment seed | - | - | 100.0 |

Industrial Applicability

The present invention is useful as a method of controlling plant diseases that exerts an excellent controlling effect.

**Claims**

1. A method of controlling plant disease **characterized by** comprising attaching at least one fungicidal active compound selected from 3-(3-bromo-6-fluoro-2-methylindol-1-ylsulfonyl)-N,N-dimethyl-1H-1,2,4-triazole-1-sulfonamide, cyazofamid, fluazinam, ethaboxam and benthiavalicarb to a seed of a plant, or applying the at least one fungicidal active compound to cultivation soil between pre-sowing and post-covering with soil.

2. A method of controlling plant disease **characterized by** comprising attaching at least one fungicidal active compound selected from 3-(3-bromo-6-fluoro-2-methylindol-1-ylsulfonyl)-N,N-dimethyl-1H-1,2,4-triazole-1-sulfonamide, cyazofamid, fluazinam, ethaboxam and benthiavalicarb to a seed of a plant.

3. A method of controlling plant disease **characterized by** comprising applying at least one fungicidal active compound selected from 3-(3-bromo-6-fluoro-2-methylindol-1-ylsulfonyl)-N,N-dimethyl-1H-1,2,4-triazole-1-sulfonamide, cyazofamid, fluazinam, ethaboxam and benthiavalicarb to cultivation soil between pre-sowing and post-covering with soil.

4.  The method of controlling plant disease according to any one of claims 1 to 3, wherein the plant disease is a disease that Mastigomycotina or clubroot fungus causes.

5.  The method of controlling plant disease according to any one of claims 1 to 3, wherein the plant disease is phytophthora blight or clubroot.

6.  The method of controlling plant disease according to any one of claims 1 to 5, wherein the fungicidal active compound is a compound selected from 3-(3-bromo-6-fluoro-2-methylindol-1-ylsulfonyl)-N,N-dimethyl-1H-1,2,4-triazole-1-sulfonamide and cyazofamid.

7.  A plant seed to which at least one fungicidal active compound selected from 3-(3-bromo-6-fluoro-2-methylindol-1-ylsulfonyl)-N,N-dimethyl-1H-1,2,4-triazole-1-sulfonamide, cyazofamid, fluazinam, ethaboxam and benthiavalicarb is attached.

8.  The plant seed according to claim 7, wherein the fungicidal active compound is a compound selected from 3-(3-bromo-6-fluoro-2-methylindol-1-ylsulfonyl)-N,N-dimethyl-1H-1,2,4-triazole-1-sulfonamide and cyazofamid.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003034607 A
- JP 2005350387 A

- JP 2002000011 A